# EUROPÄISCHE PATENTANMELDUNG

(11) **EP 0 619 549 A1**
(43) Veröffentlichungstag der Anmeldung: **12.10.1994**
(21) Anmeldenummer: 93200943.4
(22) Anmeldetag: 01.04.1993
(51) Int. Cl.: G06F 15/20

(54) **Verarbeitung von Zahlenwerten in aktiver kombiniert textueller und grafischer Form**

(71) Anmelder: Müller-Dorn, Gerhard, Dipl.-Ing., D-64807 Dieburg (DE)
(72) Erfinder: Müller-Dorn, Gerhard, Dipl.-Ing., D-64807 Dieburg (DE)

(57) **Zusammenfassung**

Daten können in tabellarischer Form verarbeitet werden, wobei frei zwischen kombinierter textueller und/oder grafischer Repräsentation der Daten gewählt werden kann. Kontrollinstrumente ermöglichen ein vertikales Blättern über den Datenbereich und ein horizontales Blättern über den Spalten- bzw. Komponentenbereich der Daten unabhängig davon, in welcher Form die Daten aktuell repräsentiert werden. Trotz grafischer Repräsentation können beliebig viele Daten(sätze) verarbeitet werden. Die Werte der Daten können in der grafischen Repräsentation durch Direktmanipulation verändert werden.

## Beschreibung

Die Erfindung betrifft die Verarbeitung von Daten (Zahlenwerte mit fachlicher Bedeutung) in tabellarischer Form mit freier Wahl für eine textuelle und/oder grafische Repräsentation (auch kombiniert), für eine beliebig große Anzahl von Daten(sätzen) und grafischer Direktmanipulation der Werte.

### Beschreibung

Eine Verarbeitung von Daten(sätzen) in tabellarischer Form bieten heute am Markt befindliche Standardsoftwaresysteme für Tabellenkalkulationen, auch Spreadsheet-Software genannt. Ein aktueller Vergleich ist beschrieben in der Ausgabe des Magazins 'PC Professionell 12/92'. Zum Leistungsvergleich solcher Systeme werden u.a. betrachtet:
- Arbeitsblätter: Dreidimensional, Anzahl Zeilen, Anzahl Spalten etc.
- Grafikfunktionen: Darstellung der Daten in Balkendiagramm, Liniendiagramm, etc.
- Datenbaukfunktionen: z.B. Anzahl Datensätze, Felder je Datensatz, Datenübertragung in externe Datenbanken, etc.

Charakteristisch für solche Systeme sind folgende Punkte:
1) Daten werden zum einen textuell in Tabellenform bereitgestellt. Zum anderen können Daten der Tabelle wahlweise in mehreren Darstellungsformen mittels Grafikfunktionen aufbereitet werden. Die Repräsentation von Daten der Tabelle wird immer getrennt zu der Existenz der Daten in der Tabelle betrachtet. Ein Datum, ist textuell als Tabellenwert vorhanden, zum anderen als grafischer Wert sichtbar. Änderungen am grafischen Wert führen nicht direkt zur Änderung des entsprechenden Wertes in der Tabelle (keine aktive Grafik und keine Direktmanipulation).
2) Eine Grafik repräsentiert einen Teil der Datensätze oder eine fest vorgegebene, begrenzte Anzahl von Datensätzen der Tabelle. Hierbei muß die Grafik als Ganzes sichtbar dargestellt werden können.

Der im Patentanspruch 1 angegebenen Erfindung liegt das Problem zugrunde, bei unbeschränkter Anzahl von Datensätzen eine Verarbeitung der Daten zu schaffen, bei der unterschiedliche Repräsentationsformen zur Darstellung von Komponenten der Datensätze (Spalten) gewählt werden können, wobei Kontrollinstrumente, die über alle Komponenten hinweg wirken, nachwievor eine Bearbeitung der Daten im Gesamtzusammenhang aller Komponenten gewährleisten. Zur Änderung von Spaltenwerten ist kein Wechsel der Repräsentationsform notwendig.

Dieses Problem wird durch die im Patentanspruch aufgeführten Merkmale gelöst.

Die mit der Erfindung erzielten Vorteile sind:
1) Eine nicht vorbestimmte Anzahl von Datensätzen läßt sich in den in der Erfindung beschriebenen, insbesondere grafischen, Repräsentationsformen verarbeiten. Auch bei einem dynamischen Nachlesen von Datensätzen aus Datenbanken - implizit veranlaßt durch Vorwärts- oder Rückwärtsblättern - sind nicht erneut separate Grafiken zu erzeugen; nachgelesene Datensätze werden direkt in der gewählten Gesamtdarstellungsform repräsentiert. Die durch die Erfindung gegebene Verarbeitungsform läßt sich auch einsetzen, wenn es sich um einen kontinuierlichen Strom von Daten(sätzen) z.B. zur Überwachung bzw. Steuerung eines Real-Time-Prozesses handelt.
2) Das Aufsuchen und Verarbeiten von Daten kann explorativ vorgenommen werden, dergestalt, daß
   a) schnell von einer Repräsentationsform der Daten auf eine andere umgeschaltet werden kann, um
      - zunächst visuell zu ermitteln, welche Darstellungsform in bezug auf die Art der Daten zum Aussuchen und Verarbeiten derselben am geeignetesten erscheint,
      - nach Auswahl der Darstellungsform das Aufsuchen und Verarbeiten grafisch oder textuell vorzunehmen, falls die Charakteristik der Daten, z.B. einer Spalte, beim Blättern im Datenbereich sich stark ändert, einen Wechsel zu einer geeigneteren Darstellungsform vorzunehmen.
   b) der inhaltliche Zusammenhang über alle Spalten hinweg erhalten bleibt unabhängig der für jede Spalte gewählten Darstellungsform,
3) In einem Datenbestand mit unbekannten Werten können Daten schneller aufgefunden werden, da
   a) für jede Komponente eine entsprechend der Charakteristik der Daten bestmögliche Repräsentationsform gewählt werden kann,
   b) für solche Komponenten, für die eine grafische Repräsentationsform gewählt wurde, die Vorteile des visuellen Vergleichs⁽¹⁾ gegeben sind, der unmittelbare Bezug zu Werten anderer Komponenten, die textuell repräsentiert sind, jedoch erhalten bleibt.
4) Die kombinierten Repräsentationsformen werden insbesondere genutzt, um in einem Datenbestand mit unbekannten Werten, bestimmte Daten schnell aufzufinden, und nicht nur, um strukturell bekannte Daten zu Präsentationszwecken in einer Präsentationsgrafik separat aufzubereiten, wie dies bei bisher bekannten Lösungen der Fall ist.
Der Nutzen der im Patentanspruch 1 dargestellten Erfindung wird durch die im Patentanspruch 2 angegebenen Erweiterungen erhöht, da viele Komponenten der Datensätze zugleich in übersichtlicher Form darstellbar sind:
- Der Anzeigebereich wird überlagernd benutzt (f). Die hohe Ausnutzung des zur Verfügung stehenden Platzes bedingt, daß ein Blättern über Komponenten hinweg weniger häufig vorgenommen werden muß.
- Daten werden mittels freier Skalierung in verdichteter Form angezeigt (g). Eine Skalierung kann z.B. so gewählt sein, daß nur Daten mit mittleren Werten grafisch in Bezug zueinander gesetzt werden sollen und Daten mit extremen Werten in *gekappter*⁽²⁾ Form angezeigt werden. Die Darstellung ist somit nicht zwangsweise durch Ausreißer-Werte geprägt, sondern aus Sicht der Verarbeitung wichtigen Daten.
- Der visuelle Vergleich wird wesentlich unterstützt (h). Auffällige Werte, z.B. Ausreisser, oder auch viele ähnliche Werte, z.B. diejenigen, die sehr nahe am Schwellwertpfeil liegen, sind sehr leicht zu erkennen.
- Darstellungsbereiche können aus der Gesamtsicht herausgenommen werden (i). Nur die aus aktueller Sicht der Verarbeitung notwendigen Komponenten werden zusammenstehend angezeigt.
- Das Hereinnehmen einer Komponente in einen Darstellungsbereich bedingt, daß mehr Platz in horizontaler Richtung gewonnen wird. Dieser Vorteil ist auch für solche Komponenten gegeben, deren Daten nur textuell repräsentiert werden können (j).
- Komponenten können z.B. in unterschiedlichen Darstellungsformen gleichzeitig repräsentiert werden (k), um z.B. im direkten Vergleich die bestmögliche Darstellungsform zu wählen.

⁽¹⁾ Der Vorteil des visuellen Vergleichs grafisch dargestellter Daten liegt darin, daß die dargestellten Werte immer in Relation zueinander betrachtet werden und nicht in textueller Form absolute Werte zum Vergleich interpretiert werden müssen.
⁽²⁾ Zahlenwerte, deren grafische Repräsentation größer ist als der verfügbare Anzeigebereich werden abgeschnitten und verändern nicht die Größe des Darstellungsbereichs

Ein Ausführungsbeispiel der Erfindung wird anhand der Abbildungen 1 - 3 erläutert. Es zeigen:
Abb.1 Tabelle mit rein textueller Darstellungsform.
Abb.2 Tabelle mit unterschiedlichen Darstellungsformen.
Abb.3 Tabelle mit grafischem Darstellungsbereich, in dem 4 Komponenten repräsentiert sind.

*Anmerkung*.: Alle Abbildungen sind mittels eines vom Antragsteller entwickelten Software-Produkts erstellt, das die mit der Erfindung beschriebenen Systemleistungen unterstützt.

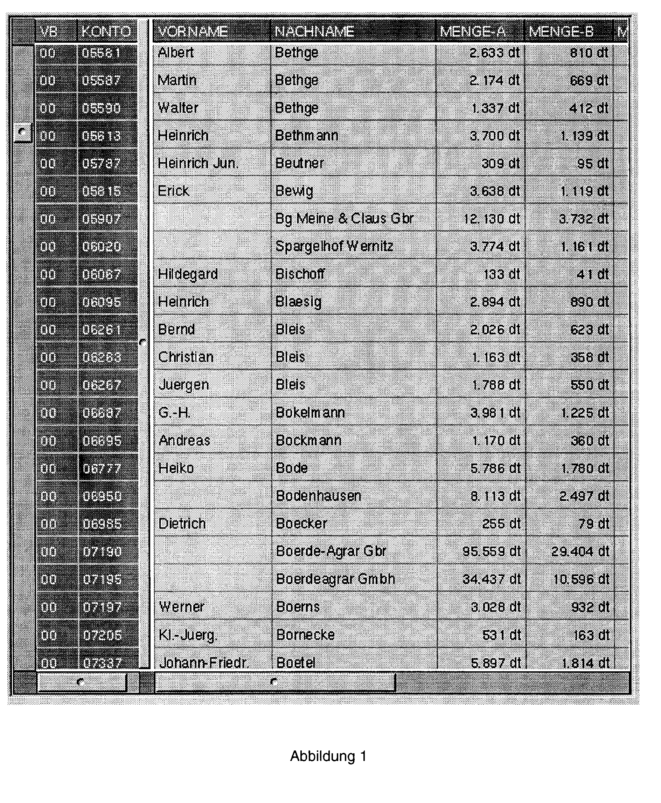

In Abbildung 1 sind Daten zu 'MENGE-A' und 'MENGE-B' textuell repräsentiert. Ein Vergleich von Werten innerhalb einer Komponente oder zwischen den beiden Komponenten ist anhand der textuellen Darstellung der Daten sehr schwer. Um Daten dieser Spalten visuell vergleichen zu können, werden folgende Schritte vorgenommen:
- Darstellung der Komponenten 'MENGE-A' und 'MENGE-B' als Liniengrafik.
- Skalierung mit Anzeige der Werte zwischen 0 und 10000 deziTonnen.
Alternativ dazu
- Verdoppeln der Komponenten 'MENGE-A' und 'MENGE-B'.
- Wechsel der Repräsentationsform zur Darstellung der Komponenten 'MENGE-A' und 'MENGE-B' als Balkendiagramm.
- Skalierung mit Anzeige der Werte zwischen 0 und 8000 deziTonnen.

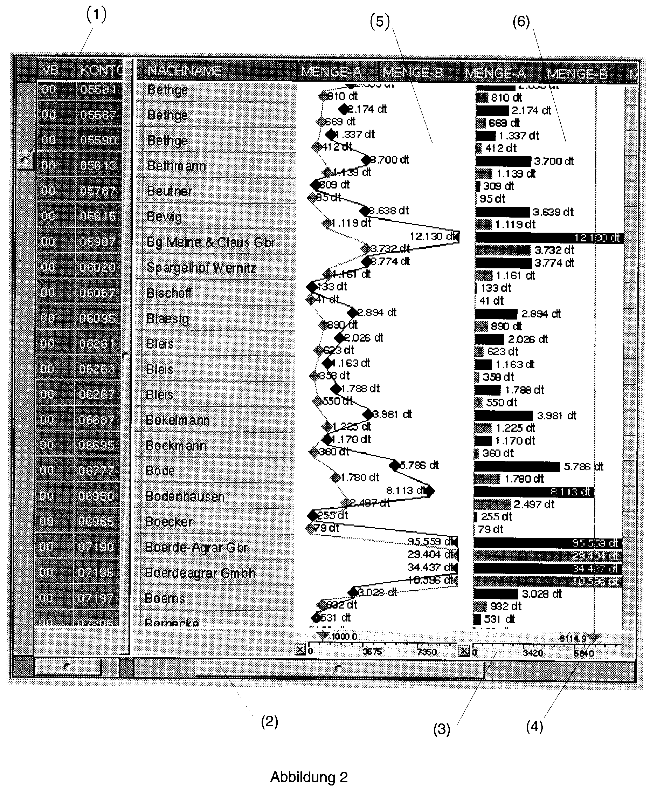

Das Ergebnis der Durchführung zeigt Abbildung 2. In der Liniengrafik ist der Schwellwertpfeil unterdrückt, im Balkendiagramm ist er auf einen gewünschten Wert positioniert.

Eine Bearbeitung in Form eines Balkendiagramms erscheint geeigneter. Folgende Schritte werden durchgeführt.
- Löschen des Darstellungsbereichs mit Liniengrafik.
- Hineinnahme der Komponente 'NACHNAME'. Daten dieser Komponente werden, da nicht anders sinnvoll, textuell in die Grafik mitaufgenommen.
- Hineinnahme der Komponente 'MENGE-C'.
- Skalierung mit Anzeige der Werte zwischen 0 und 5300 deziTonnen.
- Setzen des Schwellwertpfeils auf niederige Position.

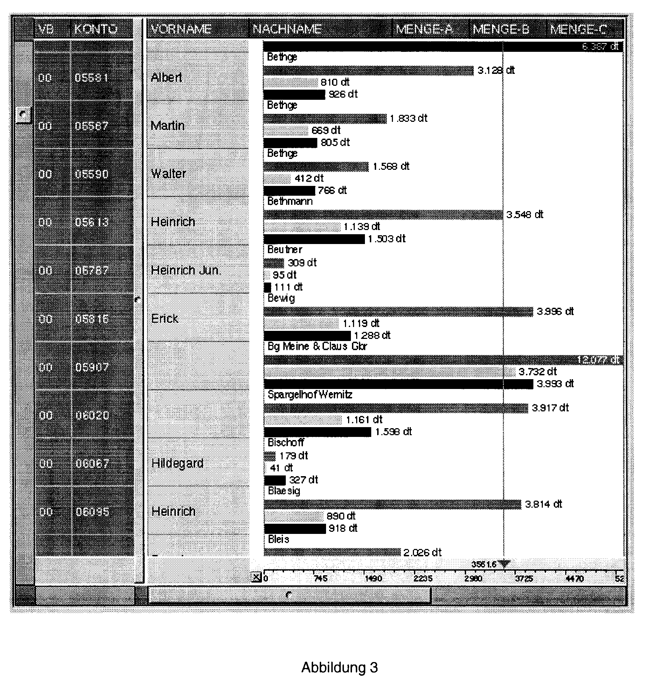

Das Ergebnis der Durchführung zeigt Abbildung 3. Über die grafische Darstellung der Mengenangaben können sofort Daten von Interesse aufgefunden werden, wobei der 'NACHNAME' unmittelbar aus der Grafik ablesbar ist. Der Vergleich der Daten zu 'MENGE-B' und 'MENGE-C' zeigt, daß eine starke Ähnlichkeit in den Werten gegeben ist.
⁽¹⁾ Die tabellarische Form ist nicht eingeschränkt zu sehen, daß wie in der Abbildung 1 dargestellt, Spalten horizontal und Datensätze vertikal angeordnet sind. Eine um 90° gekippte Form wäre z.B. ebenfalls denkbar; Spaltenbereiche werden dann zu Zeilenbereichen, und das Blättern über Datensätze erfolgt dann horizontal. Insofern sind die Begriffe 'Tabelle', 'Spalte', 'Spaltenwert' hier nur bzgl. derin Abbildung 1 gewählten Form verwendet und für eine andere Form der grafischen Anordnung durch entsprechend geeignete Begriffe zu ersetzen.
⁽²⁾ siehe (1) in Abbildung 2
⁽³⁾ siehe (2) in Abbildung 2
⁽⁴⁾ In (5) und (6) sind z.B. jeweils 2 Spalten enthalten.
⁽⁵⁾ siehe (3) in Abbildung 2
⁽⁶⁾ siehe (4) in Abbildung 2

## Patentansprüche

1. Verarbeitung von Daten in tabellarischer Form⁽¹⁾ mit freier Wahl für eine textuelle und/oder grafische Repräsentation der Daten dadurch gekennzeichnet, daß
a) genau ein Kontrollinstrument (z.B. Scrollbar⁽²⁾) zum vertikalen Blättern, d.h. zur Auswahl des Datenbereichs, auf alle *Spalten*⁽¹⁾ der tabellarischen Anzeige wirkt, unabhängig davon, ob die Daten textuell oder grafisch repräsentiert werden,
b) genau ein Kontrollinstrument (z.B. Scrollbar⁽³⁾) zum horizontalen Blättern, d.h. zur Auswahl des Spaltenbereichs auf alle *Spalten*⁽¹⁾ der tabellarischen Anzeige wirkt, unabhängig davon, ob die Daten textuell oder grafisch repräsentiert werden,
c) die Repräsentationsform für eine *Spalte*⁽¹⁾ jederzeit gewechselt werden kann,
d) Spaltenwerte in einer der Repräsentationsform entsprechenden Art geändert, oder weiterverarbeitet werden können; bei textueller Repräsentation mittels textueller Eingabe über Tastatur, bei grafischer Repräsentation wahlweise über Mausbewegung oder textuelle Eingabe über Tastatur,
e) die Anzahl der Daten, bzw. Datensätze, beliebig groß sein kann, und trotzdem eine Darstellung und Verarbeitung in grafischer Form möglich ist.

2. Verarbeitung von Daten wie in Patentanspruch 1 dadurch gekennzeichnet, daß
f) in jedem Darstellungsbereich einer bestimmten Repräsentationsform die Spaltenwerte mehrerer ⁽⁴⁾ *Spalten*⁽¹⁾ grafisch repräsentiert werden können,
g) bei grafischer Repräsentation für jeden Darstellungsbereich mit einem Skalierungsinstrument ⁽⁵⁾, z.B. einem Lineal, eine Skalierung vorgenommen werden kann,
h) bei grafischer Repräsentation für jeden Darstellungsbereich mit einem Pfeil⁽⁶⁾ auf einen aufdem Lineal sichtbaren Schwellwert positioniert werden kann,
i) grafische Darstellungsbereiche als eigenständige Objekte aus der Tabellenmatrix herausgenommen und aufder Arbeitsfläche frei plaziert werden können, wobei allerdings gilt, daß die in a) und b) genannten Kontrollinstrumente nach wievor auf alle Spaltenbereiche also auch auf die frei Plazierten wirken,
j) in einen Darstellungsbereich grafischer Form auch Spalten, deren Daten eines Datentyps sind, der keine grafische Repräsentation zuläßt, aufgenommen werden können. Die Daten, z.B. Namen, werden als textuelle Werte angezeigt,
k) Datenwerte mehrfach in unterschiedlichen Repräsentationsformen (Text, beschriftete Grafik, nicht beschriftete Grafik) dargestellt werden können.
l) die grafische Vergabe eines Wertes mit einer stufenlosen Grobabstimmung (schnelle Mausbewegung) und Feinabstimmung (langsame Mausbewegung) in Abhängigkeit der Geschwindigkeit, mit der die Maus bewegt wird, erfolgt.
